# EUROPÄISCHE PATENTSCHRIFT

(11) **EP 0 964 169 B1**
(45) Veröffentlichungstag und Bekanntmachung des Hinweises auf die Patenterteilung: **18.08.2004**
(21) Anmeldenummer: 99110728.5
(22) Anmeldetag: 04.06.1999
(51) Int. Cl.: F16B 13/12

(54) **Rahmendübel**
Frame dowel
Cheville pour cadres

(30) Priorität: 09.06.1998 DE 19825689
(43) Veröffentlichungstag der Anmeldung: 15.12.1999
(73) Patentinhaber: Adolf Würth GmbH & Co. KG, 74653 Künzelsau (DE)
(72) Erfinder: Wieland, Achim, 74211 Leingarten (DE)
(74) Vertreter: Patentanwälte Ruff, Wilhelm, Beier, Dauster & Partner

(56) Entgegenhaltungen:
- EP-A- 0 109 026
- EP-A- 0 529 229
- DE-A- 3 416 797
- FR-A- 2 016 703
- "Fischer-Universal-Rahmenduebel FUR; Revolutionäre Technik für höchste Leistungen in Beton und Mauerwerk." BEFESTIGUNGSKATALOG 3596, Oktober 1995 (1995-10), Seiten 36-37, XP002139474 Waldachtal,DE

## Beschreibung

Die Erfindung geht aus von einem Rahmendübel, wie er z. B. zur Befestigung von Fensterrahmen an Mauerwerk bekannt ist.

Es ist bereits ein Spreizdübel bekannt (EP 472851), dessen Spreizbereich aus einer Vielzahl hintereinander angeordneter flacher Spreizscheiben mit exzentrisch angeordneten Bohrungen besteht. Beim Eindrehen einer Befestigungsschraube werden die Bohrungen ausgerichtet und damit die Scheiben nach außen verschoben.

Weiterhin ist ein Dübel bekannt (DE 1500934 A1), bei dem aus einer Dübelhülse Spreizelemente nach außen verschwenkt werden können. Eine Verschwenkung um eine Achse parallel zur Längsachse des Dübels ist bekannt. Dabei sind die auszuschwenkenden Teile in einer Abwicklung der Dübelhülse rechteckig.

Darüber hinaus ist ein Dübel mit einer Vielzahl von auslenkbaren Spreizelementen bekannt, die um eine parallel zur Längsachse des Dübels verlaufende Achse verschwenkt werden (FR 2016703). In einer Abwicklung bilden die Spreizelemente schmale langgestreckte Rechtecke, die um ihre Stirnseiten verschwenkt werden. Die Wanddicke der Spreizelemente in radialer Richtung nimmt von ihren Anlenkstellen ausgehend zu.

Der Erfindung liegt die Aufgabe zugrunde, einen Dübel zu schaffen, der bei einfacher Herstellung ein vergrößertes Spreizverhalten und damit eine große Haltekraft auch in ungünstigem Mauerwerk aufweist.

Zur Lösung dieser Aufgabe schlägt die Erfindung einen Dübel mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Durch die Anordnung einer Vielzahl von Spreizelementen vergrößert sich die Länge des Spreizbereichs, in dem eine Aufweitung des äußeren Durchmessers des Dübels möglich ist. Die Spreizelemente lassen sich nach innen bewegen, so daß sie nicht über die Außenkontur vorstehen. In diesem Zustand läßt sich der Dübel in das Mauerwerk einführen. Durch Einsetzen einer Schraube oder eines sonstigen langgestreckten Gegenstands werden die Spreizelemente nach außen bewegt, ggf. auch unter starker Komprimierung.

Insbesondere kann in Weiterbildung der Erfindung vorgesehen sein, daß die Spreizelemente über die Länge des Aufspreizbereichs der Dübelhülse verteilt sind. Es wird dadurch nicht nur eine Aufspreizung über einen langen Bereich der Dübelhülse erreicht, sondern auch eine gleichmäßige Aufspreizung, die sowohl am Anfang des Aufspreizbereichs als auch in seiner Mitte gleich groß sein kann.

Erfindungsgemäß kann in Weiterbildung vorgesehen sein, daß die Spreizelemente einen Abstand voneinander aufweisen. Auch dies kann zur Verbesserung der Spreizkräfte beitragen, da hierdurch Kanten gebildet werden können, die zu einer Verriegelung des Dübels im Mauerwerk führen.

Im Weiterbildung der Erfindung kann vorgesehen sein, daß zwei Reihen von Spreizelementen vorhanden sind, von denen jede Reihe in Längsrichtung des Dübels verlaufen kann. Bei zwei Bereichen von Spreizelementen kann erfindungsgemäß vorgesehen sein, daß diese diametral angeordnet sind. Es können auch mehr als zwei Reihen vorhanden sein, die dann gleichmäßig über den Umfang verteilt sind. Es ist auch möglich, daß die zwei oder mehr Bereiche von Spreizelementen nicht in Längsrichtung, sondern schräg zur Längsrichtung verlaufen. Auch in diesem Fall kann eine diametrale Anordnung der einzelnen Spreizelemente gegeben sein.

Bei zwei Reihen von Spreizelementen kann erfindungsgemäß vorgesehen sein, daß die Spreizelemente beider Reihen in Längsrichtung der Dübelhülse versetzt angeordnet sind. Auch diese Maßnahme trägt dazu bei, eine gleichmäßige Verteilung der Aufspreizmöglichkeit des Dübels zu erreichen.

Zur Bewegung der einzelnen Spreizelemente nach außen kann erfindungsgemäß vorgesehen sein, daß diese verschwenkbar mit der Dübelhülse verbunden sind. Es kann insbesondere vorgesehen sein, daß sie um eine oder mehrere Achsen parallel zu der Längsachse der Dübelhülse verschwenkt werden.

Die Spreizelemente können beispielsweise dadurch gebildet werden, daß die Wand der Dübelhülse Einschnitte aufweist. Diese Einschnitte können eine sehr kleine Breite haben, so daß die Spreizelemente in Zugrichtung des Dübels an den verbleibenden Teilen der Wand der Dübelhülse ständig anliegen.

Erfindungsgemäß kann vorgesehen sein, daß die Spreizelemente in einer Abwicklung der Dübelhülse dreieckig ausgebildet sind. Es kann vorgesehen sein, daß die Spreizelemente um eine Seite dieser Dreieckform verschwenkbar ausgebildet sind. Durch die Dreieckform kann erreicht werden dass der Übergang zwischen der Dübelhülse und den nach außen geschwenkten Spreizelementen kontinuierlich oder stetig erfolgt, so dass eine bessere Anpassung der Dübelhülse an die Wand des Lochs, in das der Dübel gesteckt wird, erfolgen kann.

In nochmaliger Weiterbildung kann vorgesehen sein, daß die in das Innere des Dübellochs, in das der Dübel eingesetzt werden soll, gerichteten vorderen Seiten der dreieckigen Form der Spreizelemente senkrecht zu der Längsachse des Dübels verlaufen.

Um das Einführen der Schraube oder des Bolzens in den Innenraum des Dübels zu erleichtern, kann erfindungsgemäß vorgesehen sein, daß die Spreizelemente dann, wenn sie nach innen bewegt sind, den Querschnitt des Innenraumes nicht vollständig belegen, sondern Platz für das Einsetzen der Spitze des Bolzens lassen.

Der Dübel kann in Weiterbildung derart hergestellt werden, daß im unbelasteten Zustand die Spreizelemente nach innen bewegt sind, also an ihrer Außenseite mit der Außenkontur des Dübels im wesentlichen bündig verlaufen.

Die Erfindung schlägt vor, den Dübel einstückig aus Kunststoff herzustellen, beispielsweise zu spritzen. Er kann in einer solchen Weise hergestellt werden, daß er nach Entnahme aus der Form noch zusammengeklappt wird und die beiden Hälften miteinander verbunden werden.

Weitere Merkmale, Einzelheiten und Vorzüge der Erfindung ergeben sich aus der folgenden Beschreibung einer bevorzugten Ausführungsform der Erfindung sowie anhand der Zeichnung.

Hierbei zeigen:
- Fig. 1: eine Seitenansicht eines von der Erfindung vorgeschlagenen Dübels;
- Fig. 2: einen Querschnitt durch den Dübel etwa längs Linie II-II in Fig. 1;
- Fig. 3: eine Seitenansicht eines Kunststoff-Spritzgußteils, aus dem der Dübel durch Zusammenklappen hergestellt wird;
- Fig. 4: eine Seitenansicht eines in einem Hohlkammerstein eingesetzten Dübels bei der Befestigung einer Platte;
- Fig. 5: einen versetzten Schnitt etwa längs Linie V-V in Fig. 4 durch den aufgeweiteten Dübeln.

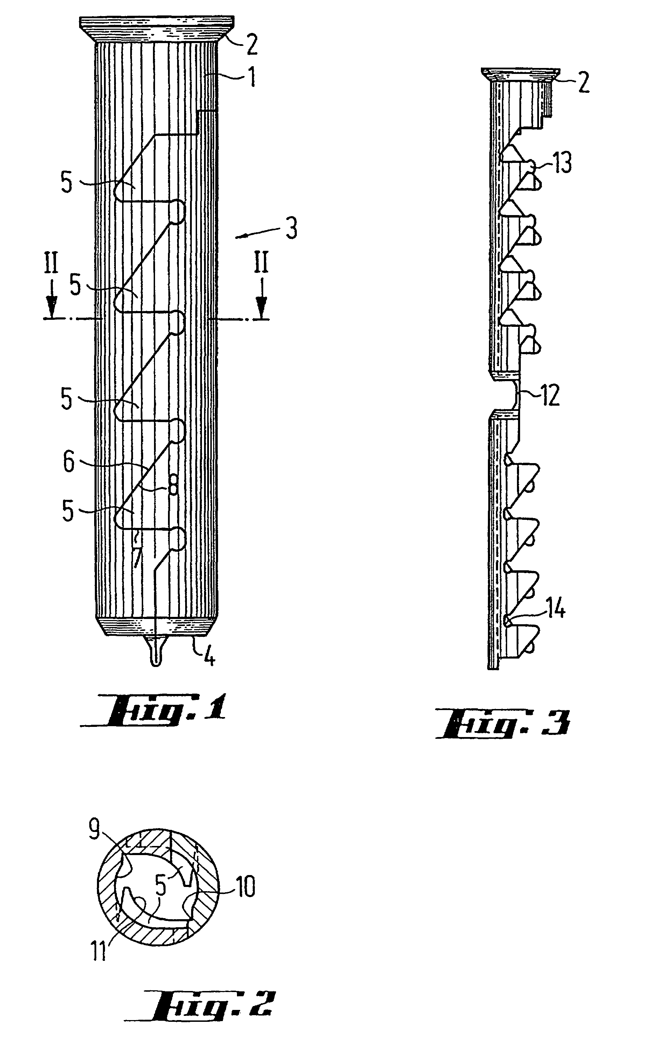

Fig. 1 zeigt den von der Erfindung vorgeschlagenen Dübel in einem nicht aufgeweiteten Zustand. Der Dübel enthält eine Dübelhülse 1, die kreiszylindrisch mit einem im dargestellten Beispiel über die gesamte Länge des Dübels konstanten Durchmesser ausgebildet ist. Am äußeren Ende enthält die Dübelhülse 1 einen umlaufenden Kragen, der eine Durchmesservergrößerung bildet. Damit soll an einem zu befestigenden Element angegriffen werden. Unmittelbar unterhalb des Kragens 2 ist der Dübel nicht aufweitbar. An diesen nicht aufweitbaren Teil, der je nach Dübel unterschiedlich lang sein kann, schließt sich der Spreizbereich 3 an, in dem eine Aufweitung des Dübels erfolgen soll. Dieser aufspreizbare Bereich erstreckt sich bis fast zu dem inneren Ende 4 des Dübels.

Der Dübel enthält auf der in Fig. 1 zu sehenden Seite vier Spreizelemente 5, die durch einen Schnitt 6 in der Dübelwand definiert werden. Jedes Spreizelement 5 weist etwa die Form eines rechtwinkligen Dreiecks auf. Eine Seite 7 jedes spreizelementes 5 verläuft senkrecht zur Längsachse des Dübels, während eine zweite Seite 8 unter einem Winkel von etwa 45° gegenüber der Längsachse verläuft. Die dritte Seite des Dreiecks verläuft in einer Richtung parallel zu der Längsachse des Dübels. Um diese Seite können die einzelnen Spreizelemente 5 aus der Wandung der Dübelhülse nach außen und auch nach innen bewegt werden. Bei dieser Bewegung handelt es sich um eine Art Verschwenkung, zum Teil auch um eine Verformung.

Fig. 2 zeigt einen Schnitt längs Linie II-II in Fig. 1. In der dargestellten Position sind die einzelnen Spreizelemente 5 so angeordnet, daß ihre Außenseite in der Außenkontur der Zylinderform der Dübelhülse 1 liegt, während ihre Innenseite gegenüber der Innenwand 9 der Dübelhülse nach innen vorspringt. Das Verschwenken der Spreizelemente 5 wird durch eine Einkerbung 10 erleichtert. Wird in den in Fig. 2 zu sehenden Innenraum des Dübels eine Schraube oder ein Bolzen eingebracht, dessen Außendurchmesser dem Innendurchmesser des Dübels zwischen den nicht aufweitbaren Wandteilen entspricht, so werden die einzelnen Spreizelemente 5 um den durch die Einkerbung 10 gebildeten Teil nach außen verschwenkt, bis die Innenseite 11 der Spreizelemente 5 bündig mit der Innenwand 9 verläuft. Dies führt zu einem Aufspreizen der Spreizelemente 5 über praktisch die gesamte Länge des aufspreizbaren Bereichs 3 des Dübels. Jedes Spreizelement 5 kann sich unabhängig von dem Verhalten des jeweils benachbarten Spreizelements verhalten, was insbesondere in Hohlkammersteinen von Vorteil ist.

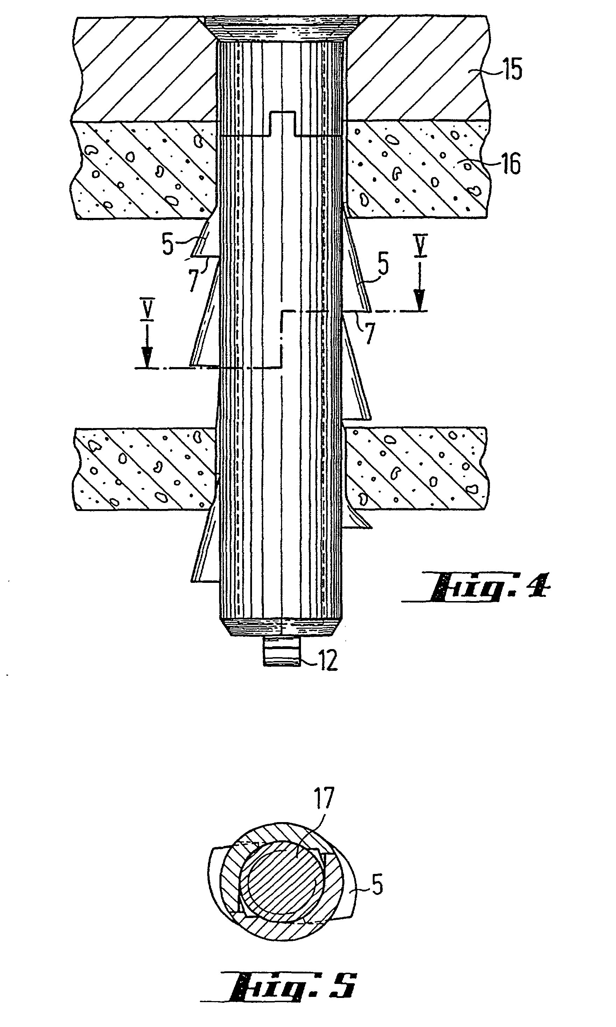

Fig. 3 zeigt den aus Kunststoff gespritzten Dübel vor seiner endgültigen Herstellung. Der Dübel wird in der in Fig. 2 dargestellten Form in einem Werkzeug gespritzt. Er besteht aus einem in Fig. 3 oberen Teil, der den Kragen 2, den nicht aufspreizbaren Bereich und die eine Hälfte des aufspreizbaren Bereichs 3 enthält, sowie aus dem in Fig. 3 unteren Teil, der den Rest des Dübels bildet. Die beiden Teile werden um einen schmalen Steg 12 so verschwenkt, daß die beiden komplementär ausgebildeten Teile ineinander greifen und dadurch den Dübel der Fig. 1 bilden. Die an beiden Teilen gebildeten abgerundeten Vorsprünge 13 greifen in entsprechende Ausnehmungen 14, so daß die beiden Teile dann auch aneinander hängen bleiben. Zwischen den Rändern der vergrößerten Vorsprünge 13 und den Rändern der Ausnehmungen 14 kann eine Verbindung beispielsweise durch Reibschweißen erfolgen. Damit wird sichergestellt, daß die beiden Dübelhälften fest miteinander verbunden sind und der Einschnitt 6 unterbrochen wird.

Fig. 4 und 5 zeigen den Dübel in dem Zustand, den er einnimmt, wenn er benutzt wird. In Fig. 1 ist mit dem Dübel ein Rahmen 15 an einem Hohlkammerstein 16 befestigt. Der Dübel wird in nicht aufgeweitetem Zustand, siehe Fig. 1, durch ein Loch des Rahmens 15 hindurch gesteckt und in das vorher gebohrte Dübelloch in dem Hohlkammerstein 16 eingesteckt. Dann wird eine Schraube in den Innenraum der Dübelhülse eingeschraubt, die sich mit ihrem Gewinde ein Gewinde in der Wand des Dübels formt. Dabei werden die Innenflächen 11 der Spreizelemente 5 nach außen beaufschlagt, so daß sie dort, wo Platz ist, nach außen bewegt werden, während sie sich an den Stellen, wo nur wenig Platz zwischen dem Dübel und dem Dübelloch ist, zum Teil nach außen bewegen und zum Teil komprimieren. Dieser Zustand ist in Fig. 4 dargestellt. Man kann der Fig. 4 ebenso wie der Fig. 3 entnehmen, daß die auf beiden gegenüberliegenden Seiten angeordneten Spreizelemente 5 in Längsrichtung gegenseitig versetzt sind. Bei der Aufweitung entsteht auch in der Seitenansicht eine dreieckige Form, was sich aus der auch in der Aussicht der Fig. 1 zu sehenden Dreieckform der Spreizelemente 5 ergibt.

Fig. 5 zeigt einen Querschnitt durch den aufgeweiteten Dübel. Die Schraube 17 füllt den Innenraum der Dübelhülse vollständig aus. Dadurch werden die Spreizelemente 5 nach außen beaufschlagt, so daß ihre Außenkontur weit über die Außenkontur des Dübels vorspringt.

## Patentansprüche

1. Dübel, mit
1.1 einer zylindrischen Dübelhülse,
1.2 einem sich in Längsrichtung der Dübelhülse erstreckenden Innenraum,
1.3 einem Aufspreizbereich (3), sowie mit
1.4 einer Vielzahl von Spreizelementen (5), die
1.5 verschwenkbar mit der Dübelhülse verbunden sind,
1.4.1 sich aus einer Position, in der sie über die Außenkontur der Dübelhülse nicht vorstehen,
1.4.2 in eine Position bewegen lassen, in der sie über diese Außenkontur vorstehen
**dadurch gekennzeichnet, dass**
1.5 die Spreizelemente (5) in einer Abwicklung der Dübelhülse dreieckig sind und
1.6 um eine Seite des Dreiecks verschwenkt werden.

2. Dübel nach Anspruch 1, bei dem die Spreizelemente (5) über die Länge des Aufspreizbereichs (3) der Dübelhülse verteilt sind, insbesondere gleichmäßig.

3. Dübel nach Anspruch 1 oder 2, bei dem die Spreizelemente (5) einen gegenseitigen Abstand voneinander aufweisen.

4. Dübel nach einem der vorhergehenden Ansprüche, bei dem zwei Reihen von Spreizelementen (5) vorhanden sind, die insbesondere diametral angeordnet sind.

5. Dübel nach einem der vorhergehenden Ansprüche, bei dem die Spreizelemente (5) beider Reihen in Längsrichtung des Dübels versetzt angeordnet sind.

6. Dübel nach Anspruch 5, bei dem die Spreizelemente (5) um mindestens eine parallel zu der Längsachse der Dübelhülse verlaufende Achse verschwenkt werden.

7. Dübel nach einem der vorhergehenden Ansprüche, bei dem die Spreizelemente (5) durch Einschnitte (6) der Wand der Dübelhülse gebildet sind.

8. Dübel nach einem der vorhergehenden Ansprüche, bei dem die in das Innere des Bohrlochs gerichtete vordere Seite des Dreiecks senkrecht zu der Längsachse des Dübels verläuft.

9. Dübel nach einem der vorhergehenden Ansprüche, bei dem die Spreizelemente (5) in ihrem nach innen bewegten Zustand den Querschnitt des Innenraumes nicht vollständig belegen.

10. Dübel nach einem der vorhergehenden Ansprüche, bei dem in dem unbelasteten Zustand die Spreizelemente (5) mit der Außenkontur der Dübelhülse im wesentlichen bündig verlaufen.

11. Dübel nach einem der vorhergehenden Ansprüche, einstückig aus Kunststoff hergestellt.

## Claims

1. Dowel, having
1.1 a cylindrical dowel sleeve,
1.2 an interior extending in the longitudinal direction of the dowel sleeve,
1.3 an expansion region (3), and also having
1.4 a large number of expansion elements (5), which
1.5 are pivotably connected to the dowel sleeve,
1.4.1 can be moved from a position in which they do not protrude beyond the outer contour of the dowel sleeve,
1.4.2 into a position in which they protrude beyond this outer contour,
**characterized in that**
1.5 the expansion elements (5) are triangular in a development of the dowel sleeve and
1.6 are pivoted about one side of the triangle.

2. Dowel according to Claim 1, wherein the expansion elements (5) are distributed over the length of the expansion region (3) of the dowel sleeve, in particular uniformly.

3. Dowel according to Claim 1 or 2, wherein the expansion elements (5) are at a mutual spacing from one another.

4. Dowel according to one of the preceding claims, wherein there are two rows of expansion elements (5), which are in particular arranged diametrically.

5. Dowel according to one of the preceding claims, wherein the expansion elements (5) of the two rows are arranged offset in the longitudinal direction of the dowel.

6. Dowel according to Claim 5, wherein the expansion elements (5) are pivoted about at least one axis running parallel to the longitudinal axis of the dowel sleeve.

7. Dowel according to one of the preceding claims, wherein the expansion elements (5) are formed by cuts (6) in the wall of the dowel sleeve.

8. Dowel according to one of the preceding claims, wherein the front side of the triangle, oriented into the interior of the drilled hole, runs at right angles to the longitudinal axis of the dowel.

9. Dowel according to one of the preceding claims, wherein, in their state in which they are moved inwards, the expansion elements (5) do not completely occupy the cross section of the interior.

10. Dowel according to one of the preceding claims, wherein, in the unloaded state, the expansion elements (5) run essentially flush with the external contour of the dowel sleeve.

11. Dowel according to one of the preceding claims, produced in one piece from plastic.

## Revendications

1. Cheville, comprenant
1.1 une douille de cheville cylindrique,
1.2 un espace interne s'étendant dans la direction longitudinale de la douille de cheville,
1.3 une région d'écartement (3), ainsi
1.4 qu'une pluralité d'éléments d'écartement (5) qui
1.5 sont connectés de manière pivotante à la douille de cheville,
1.4.1 peuvent être déplacés d'une position dans laquelle ils ne dépassent pas au-delà du contour extérieur de la douille de cheville,
1.4.2 dans une position dans laquelle ils font saillie au-delà de ce contour extérieur,
**caractérisée en ce que**
1.5 les éléments d'écartement (5) sont triangulaires dans un développement de la douille de cheville et
1.6 sont pivotés autour d'un côté du triangle.

2. Cheville selon la revendication 1, dans laquelle les éléments d'écartement (5) sont répartis sur la longueur de la région d'écartement (3) de la douille de cheville, notamment uniformément.

3. Cheville selon la revendication 1 ou 2, dans laquelle les éléments d'écartement (5) présentent un espacement mutuel les uns des autres.

4. Cheville selon l'une quelconque des revendications précédentes, dans laquelle deux rangées d'éléments d'écartement (5) sont prévues, lesquelles sont disposées notamment diamétralement.

5. Cheville selon l'une quelconque des revendications précédentes, dans laquelle les éléments d'écartement (5) des deux rangées sont disposés de manière décalée dans la direction longitudinale de la cheville.

6. Cheville selon la revendication 5, dans laquelle les éléments d'écartement (5) sont pivotés autour d'au moins un axe s'étendant parallèlement à l'axe longitudinal de la douille de cheville.

7. Cheville selon l'une quelconque des revendications précédentes, dans laquelle les éléments d'écartement (5) sont formés par des entailles (6) dans la paroi de la douille de cheville.

8. Cheville selon l'une quelconque des revendications précédentes, dans laquelle le côté avant du triangle orienté dans l'intérieur du trou borgne s'étend perpendiculairement à l'axe longitudinal de la cheville.

9. Cheville selon l'une quelconque des revendications précédentes, dans laquelle les éléments d'écartement (5) n'occupent pas complètement la section transversale de l'espace interne dans leur état déplacé vers l'intérieur.

10. Cheville selon l'une quelconque des revendications précédentes, dans laquelle les éléments d'écartement (5) s'étendent essentiellement en affleurement avec le contour extérieur de la douille de cheville dans l'état non sollicité.

11. Cheville selon l'une quelconque des revendications précédentes, fabriquée d'une pièce en plastique.
